# EUROPEAN PATENT APPLICATION

(11) **EP 2 840 849 A1**
(43) Date of publication of application: **25.02.2015**
(21) Application number: 13787958.1
(22) Date of filing: 02.02.2013
(51) Int. Cl.: H04W 72/04

(54) **RESOURCE RECONFIGURATION METHOD AND SYSTEM, BASE STATION AND RNC FOR COMMON ENHANCED DEDICATED CHANNEL**

(30) Priority: 08.05.2012 CN 201210140124
(71) Applicant: Huawei Technologies Co., Ltd., Shenzhen, Guangdong 518129 (CN)
(72) Inventor: LI, Bingzhao, Shenzhen Guangdong 518129 (CN); CHEN, Yanyan, Shenzhen Guangdong 518129 (CN)
(74) Representative: Epping - Hermann - Fischer
(86) International application number: PCT/CN2013/071302
(87) International publication number: WO 2013/166871

(57) **Abstract**

The present application is applicable to the communications field and provides a method and a system for reconfiguring a common enhanced dedicated channel resource, a base station, and an RNC, the method includes: receiving a common enhanced dedicated channel resource, where the common enhanced dedicated channel resource is allocated by the RNC to a forward access channel for use in a reconfiguration process of a physical shared channel; receiving a radio link management message sent by the RNC, where the radio link management message carries a unique identifier of a resource allocated by the RNC to a user equipment in a dedicated channel state, and the unique identifier is a unique identifier of a sub-resource in the common enhanced dedicated resource; determining, according to the unique identifier of the resource, whether the user equipment for which a dedicated channel state link is to be established is in a dedicated channel state currently; and returning response information to the RNC, so that the RNC sends the response information to the user equipment in the dedicated channel state. In the present application, resource utilization may be improved effectively, and access of a user equipment in a dedicated channel state is not delayed.

## Description

This application claims priority to Chinese Patent Application No. 201210140124.0, filed with the Chinese Patent Office on May 8, 2012 and entitled "METHOD AND SYSTEM FOR RECONFIGURING COMMON ENHANCED DEDICATED CHANNEL RESOURCE, BASE STATION AND RNC", which is incorporated herein by reference in its entirety.

### TECHNICAL FIELD

The present application relates to the field of communications technologies, and in particular, to a method and a system for reconfiguring a common enhanced dedicated channel resource, a base station, and a radio network controller (RNC).

### BACKGROUND

Reconfiguration of an existing common enhanced dedicated channel (Common E-DCH) resource is completed by reconfiguring a physical shared channel. A UE in a dedicated channel (Cell_DCH) state is unable to use a Common E-DCH resource (including a fractional dedicated physical channel (F-DPCH) resource, an E-DCH relative grant channel (E-RGCH) resource, an E-DCH HARQ acknowledgment indicator channel (E-HICH) resource, or a fractional transmitted precoding indicator channel (F-TPICH) resource) that is reserved for a user equipment (UE) in a forward access channel state (Cell_FACH). If a Cell_DCH user equipment needs to use the reserved resource, reconfiguring the physical shared channel is the only way. However, before a reconfiguration process, the Common E-DCH resource used by the Cell_FACH UE needs to be released first, and a releasing process takes time, thereby causing delayed access of the Cell_DCH UE.

### SUMMARY

According to multiple aspects of the present application, a method for reconfiguring a common enhanced dedicated channel resource is provided to solve a problem that delayed access of a UE in a Cell DCH state is caused in a reconfiguration process of a Common E-DCH resource in the prior art.

According to one aspect of the present application, a method for reconfiguring a common enhanced dedicated channel resource is provided, where the method includes:
receiving a common enhanced dedicated channel (Common EDCH) resource, where the common enhanced dedicated channel (Common EDCH) resource is allocated by a radio network controller (RNC) to a forward access channel (FACH) for use in a reconfiguration process of a physical shared channel;
receiving a radio link management message sent by the RNC, where the radio link management message carries a unique identifier of a resource allocated by the RNC to a user equipment in a dedicated channel (Cell_DCH) state, and the unique identifier of the resource is a unique identifier of a sub-resource in the Common EDCH resource;
determining, according to the unique identifier of the resource, whether the user equipment for which a Cell_DCH link is to be established is in a Cell_FACH state currently; and
returning response information to the RNC, so that the RNC sends the response information to the Cell_DCH user equipment.

According to another aspect of the present application, a method for reconfiguring a common enhanced dedicated channel resource is provided, where the method includes:
allocating a common enhanced dedicated channel (Common EDCH) resource to a forward access channel (FACH) in a base station in a reconfiguration process of a physical shared channel, and informing a Cell_DCH user equipment in a forward access channel state of the allocated Common EDCH resource in a form of broadcast;
sending a radio link management message to a base station, where the radio link management message carries a unique identifier of a resource allocated to the Cell_DCH user equipment, and the unique identifier of the resource is a unique identifier of a sub-resource in the Common EDCH resource, so that the base station determines, according to the unique identifier of the resource, whether the user equipment for which a Cell_DCH link is to be established is in a Cell_FACH state currently;
receiving response information returned by the base station; and
sending the response information to the Cell_DCH user equipment.

According to another aspect of the present application, a base station is provided, where the base station includes:
a first receiving unit, configured to receive a common enhanced dedicated channel (Common EDCH) resource, where the common enhanced dedicated channel (Common EDCH) resource is allocated by a radio network controller (RNC) to a forward access channel (FACH) for use in a reconfiguration process of a physical shared channel;
a second receiving unit, configured to receive a radio link management message sent by the RNC, where the radio link management message carries a unique identifier of a resource allocated by the RNC to a user equipment in a dedicated channel (Cell_DCH) state, and the unique identifier of the resource is a unique identifier of a sub-resource in the Common EDCH resource;
a determining unit, configured to determine, according to the unique identifier of the resource, whether the user equipment for which a Cell_DCH link is to be established is in a Cell_FACH state currently; and
a sending unit, configured to return response information to the RNC, so that the RNC sends the response information to the Cell_DCH user equipment.

According to another aspect of the present application, a radio network controller is provided, where the radio network controller includes:
a resource configuring unit, configured to allocate a common enhanced dedicated channel (Common EDCH) resource to a forward access channel (FACH) in a base station in a reconfiguration process of a physical shared channel, and inform a Cell_DCH user equipment in a forward access channel state of the allocated Common EDCH resource in a form of broadcast;
a first information sending unit, configured to send a radio link management message to the base station, where the radio link management message carries a unique identifier of a resource allocated to the Cell_DCH user equipment, and the unique identifier of the resource is a unique identifier of a sub-resource in the Common EDCH resource, so that the base station determines, according to the unique identifier of the resource, whether the user equipment for which a Cell_DCH link is to be established is in a Cell_FACH state currently;
an information receiving unit, configured to receive response information returned by the base station; and
a second information sending unit, configured to send the response information to the Cell_DCH user equipment.

According to another aspect of the present application, a system for reconfiguring a common enhanced dedicated channel resource is provided, where the system includes the base station and/or the radio network controller.

It can be seen from the foregoing technical solutions that, resource utilization is improved.

### BRIEF DESCRIPTION OF DRAWINGS

To describe the technical solutions in the embodiments of the present application more clearly, the following briefly introduces the accompanying drawings required for describing the embodiments or the prior art. Apparently, the accompanying drawings in the following description show merely some embodiments of the present application, and persons of ordinary skill in the art may still derive other drawings from these accompanying drawings without creative efforts.
FIG. 1 is a composition structural diagram of a system for reconfiguring a common enhanced dedicated channel resource according to an embodiment of the present application;
FIG. 2 is an implementation flowchart of a method for reconfiguring a common enhanced dedicated channel resource according to another embodiment of the present application;
FIG. 3 is an implementation flowchart of a method for reconfiguring a common enhanced dedicated channel resource according to another embodiment of the present application;
FIG. 4 is an interaction flowchart of a method for reconfiguring a common enhanced dedicated channel resource according to another embodiment of the present application;
FIG. 5 is a composition structural diagram of a base station according to another embodiment of the present application; and
FIG. 6 is a composition structural diagram of a radio network controller according to another embodiment of the present application.

### DESCRIPTION OF EMBODIMENTS

The following descriptions propose specific details, such as specific system structures, interfaces and technologies for illustration rather than limitation, so as to understand the present application thoroughly. However, persons skilled in the art should understand that, the present application may also be implemented in other embodiments without these specific details. In other cases, detailed descriptions of an apparatus, a circuit, and a method that are well known are omitted, so as to prevent unnecessary details from obstructing descriptions of the present application.

Technologies described in this specification may be applied to various communications systems, for example, current 2G and 3G communications systems and a next-generation communications system, for example, a global system for mobile communications (GSM, Global System for Mobile communications), a code division multiple access (CDMA, Code Division Multiple Access) system, a time division multiple access (TDMA, Time Division Multiple Access) system, a wideband code division multiple access (WCDMA, Wideband Code Division Multiple Access Wireless) system, a frequency division multiple access (FDMA, Frequency Division Multiple Addressing) system, an orthogonal frequency-division multiple access (OFDMA, Orthogonal Frequency-Division Multiple Access) system, a single-carrier FDMA (SC-FDMA) system, a general packet radio service (GPRS, General Packet Radio Service) system, a long term evolution (LTE, Long Term Evolution) system, and other similar communications systems.

Various aspects are described in this specification with reference to a user equipment and/or a base station and/or a base station controller.

The user equipment may be a wireless terminal or a wired terminal. The wireless terminal may refer to a device that provides a user with voice and/or data connectivity, a handheld device with a radio connection function, or another processing device connected to a wireless modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as personal communication service (PCS, Personal Communication Service) phone, a cordless telephone, a session initiation protocol (SIP) phone set, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to a device that communicates with a wireless terminal via one or more sectors on an air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may further coordinate attribute management for the air interface. For example, the base station may be a base station (BTS, Base Transceiver Station) in GSM or the CDMA system, may also be a base station (NodeB) in WCDMA system, and may further be an evolved NodeB (NodeB, eNB, or e-NodeB, evolutional Node B) in the LTE, which is not limited in the present invention.

The base station controller may be a base station controller (BSC, base station controller) in GSM or CDMA, or a radio network controller (RNC, Radio Network Controller) in WCDMA, which is not limited in the present invention.

In addition, the terms "system" and "network" may often be used interchangeably in this specification. The term "and/or" in this specification is only to describe an association relationship of associated objects and indicates that three relationships may exist. For example, A and/or B may represent the following three cases: A exists separately, both A and B exist, and B exists separately. In addition, the character "/" in this specification generally indicates that the former and latter associated objects are in an "or" relationship.

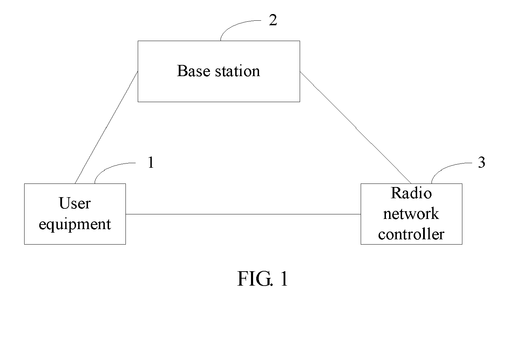

FIG. 1 shows a composition structure of a system for reconfiguring a common enhanced dedicated channel resource according to an embodiment of the present application. The method for reconfiguring a common enhanced dedicated resource channel provided in this embodiment of the present application may be applied to the system for reconfiguring a common enhanced dedicated channel resource. For ease of description, only a part related to this embodiment of the present application is shown.

The system for reconfiguring a common enhanced dedicated channel resource includes a user equipment (UE) 1, a base station (NodeB) 2, and a radio network controller (RNC) 3, where the UE 1, the Node B 2, and the RNC 3 communicate with each other through a network. The UE 1 includes but is not limited to any network terminal device that can be connected to the Node B 2 through the network, such as a mobile phone. The RNC 3 is configured to allocate a Common EDCH resource to a forward access channel (FACH) in the Node B 2 in a reconfiguration process of a physical shared channel, and inform a Cell_DCH UE 1 of the allocated Common EDCH resource in a form of broadcast. When a UE 1 completes access, the RNC 3 decides to establish this user in a Cell_DCH state, and when an available Cell_DCH dedicated resource is insufficient, a radio link management message that carries a unique identifier of a resource allocated to the UE 1 is sent to the Node B 2, so that the UE 1 establishes a Cell_DCH connection. The unique identifier of the resource is a unique identifier of a sub-resource in the Common EDCH resource. The Node B 2 determines, according to the unique identifier of the resource, whether the resource allocated to the Cell_DCH UE 1 is being used by a Cell_FACH UE 1, decides, according to a determining result, to use the resource allocated by the RNC 3 or modify the allocated resource, and returns response information to the RNC 3. The RNC 3 sends the information to the Cell_DCH UE 1. In this embodiment of the present application, when a resource to be used is insufficient, the Cell_DCH UE 1 may preempt a resource that is allocated to the Cell_FACH UE 1 in advance with no need of reconfiguration of a physical shared channel, thereby improving resource utilization. Moreover, the resource that is allocated to the Cell_FACH UE 1 in advance is preempted during the access of the Cell_DCH UE 1, so that the access of the Cell_DCH UE 1 is not delayed.

### Another Embodiment:

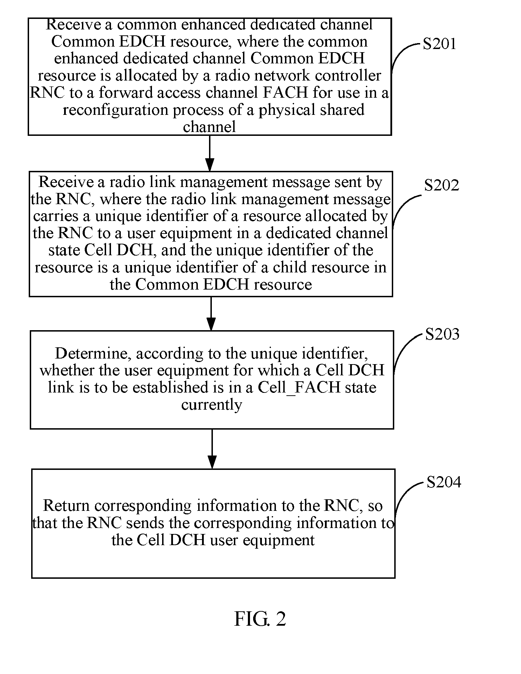

FIG. 2 shows an implementation process of a method for reconfiguring a common enhanced dedicated channel resource according to another embodiment of the present application. The process of this embodiment is executed by a base station 2 in the system for reconfiguring a common enhanced dedicated channel resource shown in FIG. 1, and the process of the method is described in detail as follows:
S201. Receive a common enhanced dedicated channel (Common EDCH) resource, where the common enhanced dedicated channel (Common EDCH) resource is allocated by a radio network controller (RNC) to a forward access channel (FACH) for use in a reconfiguration process of a physical shared channel.

In this embodiment, the Common EDCH resource includes but is not limited to at least one of the following sub-resources: a fractional dedicated physical channel (F-DPCH) resource, an E-DCH relative grant channel (E-RGCH) resource, an E-DCH HARQ acknowledgment indicator channel (E-HICH) resource, and a fractional transmitted precoding indicator channel (F-TPICH) resource. The included one or more resources are called as sub-resources of a Common EDCH.

It should be noted that the F-DPCH resource includes a code channel and a timeslot offset of the F-DPCH resource, and the timeslot offset is determined by a timing offset and a timeslot format; the E-RGCH resource includes a code channel and a signature sequence of the E-RGCH; the E-HICH resource includes a code channel and a signature sequence of the E-HICH; and the F-TPICH resource includes a code channel and a timeslot offset of the F-TPICH.

S102. Receive a radio link management message sent by the RNC, where the radio link management message carries a unique identifier of a resource allocated by the RNC to a user equipment in a dedicated channel (Cell_DCH) state, and the unique identifier of the resource is a unique identifier of a sub-resource in the Common EDCH resource.

In this embodiment, when the RNC detects that a Cell_DCH user equipment completes access, and a dedicated resource for the Cell_DCH user equipment is insufficient, the radio link management message that carries the unique identifier of the resource that is allocated by the RNC to the user equipment in the dedicated channel (Cell_DCH) state is sent to the base station.

Preferably, that the radio link management message carries the unique identifier of the resource that is allocated to the user equipment in the dedicated channel (Cell_DCH) state includes:
A. The RNC adds an indication to the radio link management message, where the indication is used to indicate the identifier of the resource that is allocated by the RNC to the Cell_DCH user equipment; or
B. The RNC allocates identification information of a resource to the Cell_DCH user equipment in the radio link management message, where the identification information of the resource is unique information that determines the resource. Different resources have different identification information. For an F-DPCH channel, identification information thereof is a code channel number and a timeslot offset, where the timeslot offset is determined by a timeslot format and a timing offset of the F-DPCH, that is, an identifier of the F-DPCH channel can be understood as the code channel number, the timing offset, and the timeslot format of the F-DPCH; for an E-RGCH/EHICH, unique identification information thereof is a code channel number and a signature sequence identifier; for an F-TPICH resource, unique identification information thereof is a code channel number of the F-TPICH, the timing offset of the F-DPCH, and a timeslot format of the F-TPICH.

S103. Determine, according to the unique identifier, whether the user equipment for which a Cell_DCH link is to be established is in a Cell_FACH state currently.

Specifically, according to the unique identifier, it is determined whether the resource allocated by the RNC to the Cell_DCH user equipment is being used by a Cell_FACH user equipment, or it is determined whether the Cell_DCH user equipment is in the Cell_FACH state currently.

For example, according to the unique identifier, it is determined that the resource allocated by the RNC to the Cell_DCH user equipment is an F-DPCH resource in the Common EDCH resource, and it continues to be determined whether the F-DPCH resource is being used by a Cell_FACH user equipment.

S104. Return response information to the RNC, so that the RNC sends the response information to the Cell_DCH user equipment.

Specifically, whether to use the resource allocated by the RNC or modify the allocated resource is decided according to a determining result, and the response information is returned to the RNC, so that the RNC sends the response information to the Cell_DCH user equipment.

In this embodiment, the response information includes success response information or failure response information, where the success response information includes resource information allocated to the Cell_DCH user equipment, such as an E-RGCH resource and/or an E-HICH resource.

Preferably, the returned information further includes E-RGCH resource information, E-HICH resource information, F-DPCH resource information, or Common EDCH index information, and/or F-DPCH timing offset information, so that the RNC configures a timing offset of the Cell_DCH user equipment according to the F-DPCH timing offset information, acquires F-DPCH resource information from corresponding Common EDCH resource information according to the E-RGCH resource information, the E-HICH resource information, or the Common EDCH index information, and allocates the acquired F-DPCH resource information to the Cell_DCH user equipment.

Preferably, the Common EDCH resource corresponding to the unique identifier of the resource is determined according to the unique identifier of the resource, and response information is sent to the RNC, where the response information includes identification information of one or more sub-resources in the Common EDCH resource corresponding to the unique identifier of the resource.

Alternatively, the Common EDCH resource corresponding to the unique identifier of the resource is determined according to the unique identifier of the resource, and when the Common EDCH resource corresponding to the unique identifier of the resource is being used by a Cell_FACH user equipment, an uplink connection of the user equipment that uses the Common EDCH resource is released.

Specifically, when the resource allocated by the RNC to the Cell_DCH user equipment is being used by a Cell_FACH user equipment, the Common EDCH resource corresponding to the resource is released, and the success response information is sent to the RNC; when the resource allocated by the RNC to the Cell_DCH user equipment is not used by a Cell_FACH user equipment, the success response information is sent to the RNC, where the success response information includes a resource information identifier of one or more sub-resources in the Common EDCH resource, and the resource information identifier is unique information that determines the resource. Different resources have different identification information. For an F-DPCH channel, identification information thereof is a code channel number and a timeslot offset, where the timeslot offset is determined by a timeslot format and a timing offset of the F-DPCH, that is, an identifier of the F-DPCH channel can be understood as the code channel number, the timing offset, and the timeslot format of the F-DPCH; for an E-RGCH/EHICH, unique identification information thereof is a code channel number and a signature sequence identifier; for an F-TPICH resource, unique identification information thereof is a code channel number of the F-TPICH, the timing offset of the F-DPCH, and a timeslot format of the F-TPICH;
or,
the Common EDCH resource corresponding to the unique identifier of the resource is determined according to the unique identifier of the resource, and when the Common EDCH resource corresponding to the unique identifier of the resource is being used by a Cell_FACH user equipment, identification information of a sub-resource in a set of Common EDCH resources among idle Common EDCH resources is selected, and response information is sent to the RNC, where the response information includes identification information of one or more sub-resources in the Common EDCH resource.

Specifically, when the resource allocated by the RNC to the Cell_DCH user equipment is not used by a Cell_FACH user equipment, the success response information is sent to the RNC, where the success response information includes the resource information; when the resource allocated by the RNC to the Cell_DCH user equipment is being used by a Cell_FACH user equipment, it is determined whether there is an idle resource in the Common EDCH resource allocated to the FACH for use; if there is an idle resource, the success response information is sent to the RNC, where the success response information includes identification information of a sub-resource of a set of Common EDCH resources in the idle resource; and if there is no idle resource, a set of Common EDCH resources is released, and the success response information is sent to the RNC, where the success response information includes identification information of a sub-resource of the released Common EDCH resource;
or,
the Common EDCH resource corresponding to the unique identifier of the resource is determined according to the unique identifier of the resource, and when the Common EDCH resource corresponding to the unique identifier of the resource is being used by a Cell_FACH user equipment, and no idle Common EDCH resource is available, failure response information is sent to the RNC.

Specifically, when the resource allocated by the RNC to the Cell_DCH user equipment is not used by a Cell_FACH user equipment, the success response information is sent to the RNC, where the success response information includes sub-resource information of the Common EDCH resource corresponding to the resource; when the resource allocated by the RNC to the Cell_DCH user equipment is being used by a Cell_FACH user equipment, it is determined whether there is an idle resource in the Common EDCH resource allocated to the FACH for use; if there is an idle resource, the success response information is sent to the RNC, where the success response information includes sub-resource information of a set of idle Common EDCH resources in the idle resource; and if there is no idle resource, failure response information is sent to the RNC;
or,
when the user equipment for which the Cell_DCH link is to be established is in the Cell_FACH state currently, response information is sent to the RNC, where the response message includes identification information of one or more sub-resources in the Common EDCH resource that is being used by the user equipment for which the Cell_DCH link is to be established.

In this embodiment of the present application, when a resource is to be used is insufficient, the Cell_DCH UE 1 may preempt a resource that is allocated to a Cell_FACH UE 1 in advance with no need of reconfiguration of a physical shared channel, thereby improving resource utilization. Moreover, the resource that is allocated to the Cell_FACH UE 1 in advance is preempted during an access of the Cell_DCH UE 1, so that the access of the Cell_DCH UE 1 is not delayed.

### Another Embodiment:

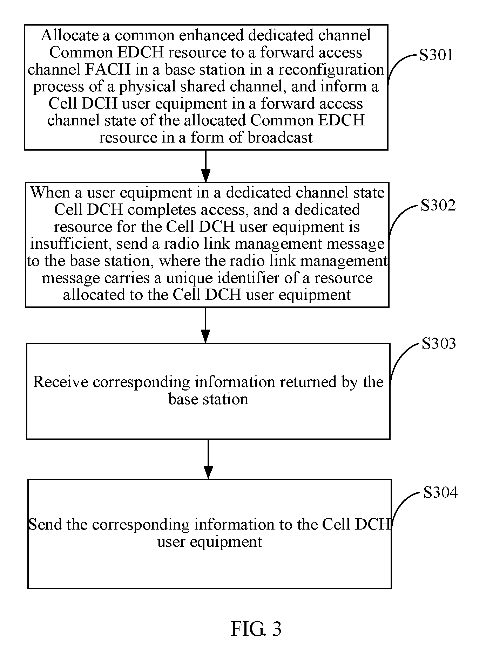

FIG. 3 shows an implementation process of a method for reconfiguring a common enhanced dedicated channel resource according to another embodiment of the present application. The process of this embodiment is executed by the RNC 3 in the system for reconfiguring a common enhanced dedicated channel resource shown in FIG. 1, and the process of the method is described in detail as follows:
S301. Allocate a common enhanced dedicated channel (Common EDCH) resource to a forward access channel (FACH) in a base station in a reconfiguration process of a physical shared channel, and inform a Cell_DCH user equipment in a forward access channel state of the allocated Common EDCH resource in a form of broadcast.

In this embodiment, the Common EDCH resource includes but is not limited to at least one of the following sub-resources: a fractional dedicated physical channel (F-DPCH) resource, an E-DCH relative grant channel (E-RGCH) resource, an E-DCH HARQ acknowledgment indicator channel (E-HICH) resource, and a fractional transmitted precoding indicator channel (F-TPICH) resource.

It should be noted that in this embodiment, the number of Common EDCH resources may be adjusted by means of a reconfiguration process of a physical shared channel according to a Cell_FACH user equipment access condition. For example, if a great number of Cell_FACH user equipments complete access, the number of Common EDCH resources is increased correspondingly.

S302. When a user equipment in a dedicated channel (Cell_DCH) state completes access, and a dedicated resource for the Cell_DCH user equipment is insufficient, send a radio link management message to the base station, where the radio link management message carries a unique identifier of a resource allocated to the Cell_DCH user equipment, and the unique identifier of the resource is a unique identifier of a sub-resource in the Common EDCH resource, so that the base station determines, according to the unique identifier of the resource, whether the user equipment for which a Cell_DCH link is to be established is in a Cell_FACH state currently.

S303. Receive response information returned by the base station.

In this embodiment, the returned response information includes success response information or failure response information, where the success response information includes the resource allocated to the Cell_DCH user equipment.

S304. Send the response information to the Cell_DCH user equipment.

In this embodiment, the sending the response information to the Cell_DCH user equipment specifically includes:
configuring a timing offset of the Cell_DCH user equipment according to F-DPCH timing offset information in the returned information, acquiring F-DPCH resource information from corresponding Common EDCH resource information according to E-RGCH resource information, E-HICH resource information, or Common EDCH index information allocated to the Cell_DCH user equipment, and allocating the acquired F-DPCH resource information to the Cell_DCH user equipment.

As an exemplary embodiment of the present application, to achieve dynamic resource adjustment and improve resource utilization, the method further includes:
after receiving success response information sent by the base station, the RNC determines, according to resource information carried in the success response information, whether a Node B modifies the allocated resource, and if the allocated resource is modified, link resource information is readjusted. For example, when a Common EDCH resource corresponding to a number that is of sub-resource of the Common EDCH and is carried in the returned message is different from a Common EDCH resource corresponding to the unique identifier that is of the resource and is carried in the radio link management message sent to the base station, it is determined that the base station modifies the allocated resource. For another example, F-DPCH resource information that is of the Common EDCH resource and is carried in the success response message is different from the F-DPCH resource information previously configured for the Node B, and then F-DPCH configuration is readjusted according to the resource information. Alternatively, for example, a Common EDCH resource corresponding to an E-HICH/E-RGCH of a resource carried in the response message is determined, and the F-DPCH resource included in the Common EDCH resource is different from the F-DPCH resource previously allocated by the RNC; then, it is considered that the resource is adjusted.

Specifically, the response message carries information, such as a code channel and a timeslot offset of the F-DPCH resource, a code channel and a signature sequence of the E-RGCH resource, a code channel and a signature sequence of the E-HICH resource, and/or a code channel and a timeslot offset of the F-TPICH resource, and the RNC determines whether the Node B modifies the allocated resource according to this information.

### Another Embodiment:

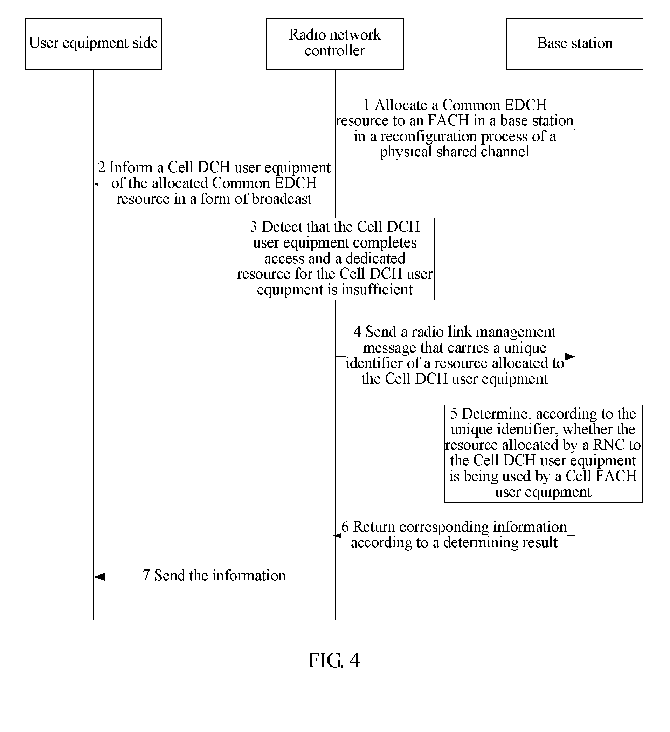

FIG. 4 shows an interaction process of a method for reconfiguring a common enhanced dedicated channel resource according to another embodiment of the present application. The process of the method is described in detail as follows:
1. A radio network controller allocates a common enhanced dedicated channel (Common EDCH) resource to a forward access channel (FACH) in a base station in a reconfiguration process of a physical shared channel.
2. The radio network controller informs a Cell_DCH user equipment in a forward access channel state of the allocated Common EDCH resource in a form of broadcast.
3. The radio network controller detects that a user equipment in a dedicated channel (Cell_DCH) state completes access, and a dedicated resource for the Cell_DCH user equipment is insufficient;
4. Send a radio link management message to the base station, where the radio link management message carries a unique identifier of a resource allocated to the Cell_DCH user equipment, and the unique identifier of the resource is a unique identifier of a sub-resource in the Common EDCH resource.
5. The base station determines, according to the unique identifier of the resource, whether the resource allocated by the RNC to the Cell_DCH user equipment is being used by a user equipment in a forward access state Cell_FACH.
6. The base station decides, according to a determining result, to use the resource allocated by the RNC or modify the allocated resource, and returns response information to the RNC; and for its specific process, reference may be made to the related description of the embodiment corresponding to FIG. 2, and details are not described herein again.
7. The radio network controller sends the response information to the Cell_DCH user equipment.

It should be noted that a user equipment in this embodiment of the present application includes a Cell_DCH user equipment and a Cell_FACH user equipment.

### Another Embodiment:

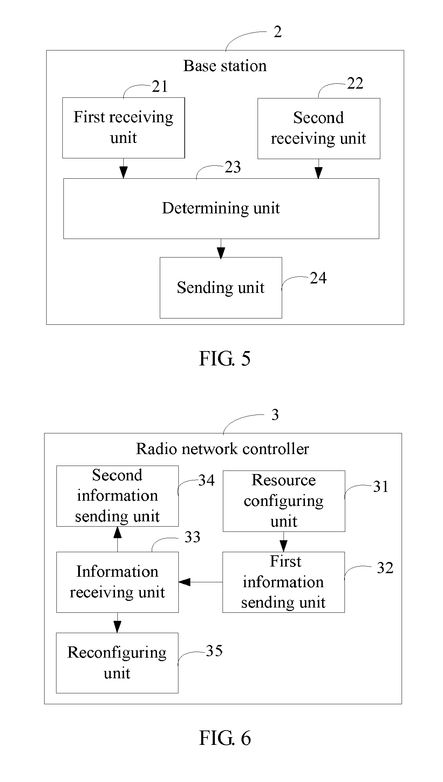

FIG. 5 shows a composition structure of a base station according to another embodiment of the present application. For ease of description, only a part related to this embodiment of the present application is shown.

The base station may be a hardware unit that runs in a system for reconfiguring a common enhanced dedicated channel resource.

The base station includes a first receiving unit 21, a second receiving unit 22, a determining unit 23, and a sending unit 24. Specific functions of the units are as follows:

The first receiving unit 21 is configured to receive a common enhanced dedicated channel (Common EDCH) resource, where the common enhanced dedicated channel (Common EDCH) resource is allocated by a radio network controller (RNC) to a forward access channel (FACH) for use in a reconfiguration process of a physical shared channel;
the second receiving unit 22 is configured to receive a radio link management message sent by the RNC, where the radio link management message carries a unique identifier of a resource allocated by the RNC to a user equipment in a dedicated channel (Cell_DCH) state, and the unique identifier of the resource is a unique identifier of a sub-resource in the Common EDCH resource;
the determining unit 23 is configured to determine, according to the unique identifier of the resource, whether the user equipment for which a Cell_DCH link is to be established is in a Cell_FACH state currently. Specifically, the determining unit 23 is configured to determine, according to the unique identifier of the resource, whether the resource allocated by the RNC to the Cell_DCH user equipment is being used by a Cell_FACH user equipment, or determine whether the Cell_DCH user equipment is in a Cell_FACH state currently; and
the sending unit 24 is configured to return response information to the RNC, so that the RNC sends the response information to the Cell_DCH user equipment. Specifically, the sending unit 24 is configured to decide, according to a determining result, to use the resource allocated by the RNC or modify the allocated resource, and return the response information to the RNC, so that the RNC sends the response information to the Cell_DCH user equipment.

Further, the sending unit 24 is specifically configured to:
determine, according to the unique identifier of the resource, a Common EDCH resource corresponding to the unique identifier of the resource, and when the Common EDCH resource corresponding to the unique identifier of the resource is being used by a Cell_FACH user equipment, release an uplink connection of the user equipment that uses the Common EDCH resource;
or,
determine, according to the unique identifier of the resource, a Common EDCH resource corresponding to the unique identifier of the resource, and when the Common EDCH resource corresponding to the unique identifier of the resource is being used by a Cell_FACH user equipment, select identification information of a sub-resource of a set of Common EDCH resources among idle Common EDCH resources, and send response information to the RNC, where the response information includes identification information of one or more sub-resources in the Common EDCH resource;
or,
determine, according to the unique identifier of the resource, a Common EDCH resource corresponding to the unique identifier of the resource, and when the Common EDCH resource corresponding to the unique identifier of the resource is being used by a Cell_FACH user equipment, and no idle Common EDCH resource is available, send failure response information to the RNC;
or,
when the user equipment for which the Cell_DCH link is to be established is in the Cell_FACH state currently, send response information to the RNC, where the response information includes identification information of one or more sub-resources in the Common EDCH resource that is being used by the user equipment for which the Cell_DCH link is to be established.

Specifically, when the resource allocated by the RNC to the Cell_DCH user equipment is being used by a Cell_FACH user equipment, the Common EDCH resource corresponding to the resource is released, and success response information is sent to the RNC; when the resource allocated by the RNC to the Cell_DCH user equipment is not used by a Cell_FACH user equipment, success response information is sent to the RNC, where the success response information includes resource identification information of one or more sub-resources in the Common EDCH resource, and identification information of the resource is unique information that determines the resource. Different resources have different identification information. For an F-DPCH channel, identification information thereof is a code channel number and a timeslot offset, where the timeslot offset is determined by a timeslot format and a timing offset of the F-DPCH, that is, an identifier of the F-DPCH channel can be understood as the code channel number, the timing offset, and the timeslot format of the F-DPCH; for an E-RGCH/EHICH, unique identification information thereof is a code channel number and a signature sequence identifier; for an F-TPICH resource, unique identification information thereof is a code channel number of the F-TPICH, the timing offset of the F-DPCH, and a timeslot format of the F-TPICH;
when the resource allocated by the RNC to the Cell_DCH user equipment is not used by a Cell_FACH user equipment, success response information is sent to the RNC, where the success response information includes the resource information; when the resource allocated by the RNC to the Cell_DCH user equipment is being used by a Cell_FACH user equipment, it is determined whether there is an idle resource in the Common EDCH resource allocated to the FACH for use; if there is an idle resource, the success response information is sent to the RNC, where the success response information includes identification information of a sub-resource of a set of Common EDCH resources in the idle resource; and if there is no idle resource, a set of Common EDCH resources are released, and the success response information is sent to the RNC, where the success response information includes identification information of a sub-resource of the released Common EDCH resource; and
when the resource allocated by the RNC to the Cell_DCH user equipment is not used by a Cell_FACH user equipment, the success response information is sent to the RNC, where the success response information includes sub-resource information of the Common EDCH resource corresponding to the resource; when the resource allocated by the RNC to the Cell_DCH user equipment is being used by a Cell_FACH user equipment, it is determined whether there is an idle resource in the Common EDCH resource allocated to the FACH for use; if there is an idle resource, the success response information is sent to the RNC, where the success response information includes sub-resource information of a set of idle Common EDCH resources in the idle resource; and if there is no idle resource, failure response information is sent to the RNC.

When the RNC allocates, by using the radio link management message, a resource to the Cell_DCH user equipment to be established, and the user equipment is in a Cell_FACH state currently, sub-resource information corresponding to the Common EDCH resource used by the user equipment is carried in the response message returned to the RNC.

In this embodiment, the Common EDCH resource includes but is not limited to at least one of the following sub-resources: a fractional dedicated physical channel (F-DPCH) resource, an E-DCH relative grant channel (E-RGCH) resource, an E-DCH HARQ acknowledgment indicator channel (E-HICH) resource, and a fractional transmitted precoding indicator channel (F-TPICH) resource.

The response information further includes E-RGCH resource information, E-HICH resource information, F-DPCH resource information, or Common EDCH index information, and/or F-DPCH timing offset information, so that the RNC configures a timing offset of the Cell_DCH user equipment according to the F-DPCH timing offset information, acquires F-DPCH resource information from corresponding Common EDCH resource information according to the E-RGCH resource information, the E-HICH resource information, or the Common EDCH index information, and allocates the acquired F-DPCH resource information to the Cell_DCH user equipment.

The base station provided in this embodiment may be used in the foregoing corresponding method for reconfiguring a common enhanced dedicated channel resource. For details, reference may be made to related descriptions of the embodiments corresponding to the methods for reconfiguring a common enhanced dedicated channel resource in FIG. 2 and FIG. 4, and details are not described herein again.

### Another Embodiment:

FIG. 6 shows a composition structure of a base station according to another embodiment of the present application. For ease of description, only a part related to this embodiment of the present application is shown.

A radio network controller may be a hardware unit that runs in a system for reconfiguring a common enhanced dedicated channel resource.

The radio network controller 3 includes a resource configuring unit 31, a first information sending unit 32, an information receiving unit 33, and a second information sending unit 34. Specific functions of the units are as follows:

The resource configuring unit 31 is configured to allocate a common enhanced dedicated channel (Common EDCH) resource to a forward access channel (FACH) in a base station in a reconfiguration process of a physical shared channel, and inform a Cell_DCH user equipment in a forward access channel state of the allocated Common EDCH resource in a form of broadcast.

The first information sending unit 32 is configured to send a radio link management message to the base station, where the radio link management message carries a unique identifier of a resource allocated by the RNC to the Cell_DCH user equipment, and the unique identifier of the resource is a unique identifier of a sub-resource in the Common EDCH resource, so that the base station determines, according to the unique identifier of the resource, whether the user equipment for which a Cell_DCH link is to be established is in a Cell_FACH state currently.

The information receiving unit 33 is configured to receive response information returned by the base station.

The second information sending unit 34 is configured to send the response information to the Cell_DCH user equipment.

Further, the radio network controller 3 further includes a reconfiguring unit 35, configured to: when a Common EDCH resource corresponding to a number that is of sub-resource of the Common EDCH and is carried in the returned message is different from a Common EDCH resource corresponding to the unique identifier that is of the resource and is carried in the radio link management message sent to the base station, determine that the base station modifies the allocated resource, and readjust link resource information.

The second information sending unit 34 is specifically configured to: configure a timing offset of the Cell_DCH user equipment according to F-DPCH timing offset information in the returned information, acquire F-DPCH resource information from corresponding Common EDCH resource information according to E-RGCH resource information, E-HICH resource information, or Common EDCH index information in the resource allocated to the Cell_DCH user equipment, and allocate the acquired F-DPCH resource information to the Cell_DCH user equipment.

The radio network controller provided in this embodiment may be used in the foregoing corresponding method for reconfiguring a common enhanced dedicated channel resource. For details, reference may be made to related descriptions of the embodiments corresponding to the methods for reconfiguring a common enhanced dedicated channel resource in FIG. 3 and FIG. 4, and details are not described herein again.

A person of ordinary skill in the art may understand that units included in another embodiment and FIG. 6 are divided only according to function logic; however, no limitation is constituted on the foregoing division, as long as corresponding functions can be implemented. In addition, a specific name of each functional unit is only for convenience to differentiate each other, and is not intended to limit the protection scope of the present application.

According to the foregoing description, when there is a shortage of a resource for a Cell_DCH user equipment to use, the Cell_DCH user equipment may preempt a resource that is allocated to a Cell_FACH user equipment in advance, with no need of reconfiguring a physical shared channel, thereby improving resource utilization. Moreover, the resource that is allocated to the Cell_FACH user equipment in advance is preempted during access of the user equipment, so that the access of the Cell_DCH user equipment is not delayed.

It may be clearly understood by persons skilled in the art that, for the purpose of convenient and brief description, division of the foregoing functional modules is merely used as an example for description. In an actual application, the foregoing functions may be assigned to different functional modules and implemented according to a need, that is, an internal structure of the apparatus is divided into different functional modules to complete all or a part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the division of modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

## Claims

1. A method for reconfiguring a common enhanced dedicated channel resource, wherein the method comprises:
receiving a common enhanced dedicated channel (Common EDCH) resource, wherein the Common EDCH resource is allocated by a radio network controller (RNC) to a forward access channel (FACH) for use in a reconfiguration process of a physical shared channel;
receiving a radio link management message sent by the RNC, wherein the radio link management message carries a unique identifier of a resource allocated by the RNC to a user equipment in a dedicated channel (Cell_DCH) state, and the unique identifier of the resource is a unique identifier of a sub-resource in the Common EDCH resource;
determining, according to the unique identifier of the resource, whether the user equipment for which a Cell_DCH link is to be established is in a Cell_FACH state currently; and
returning response information to the RNC for sending the response information to the user equipment in the Cell_DCH state.

2. The method according to claim 1, wherein the method further comprises:
determining, according to the unique identifier of the resource, a Common EDCH resource corresponding to the unique identifier of the resource; and
sending response information to the RNC, wherein the response information comprises identification information of one or more sub-resources in the Common EDCH resource corresponding to the unique identifier of the resource.

3. The method according to claim 1, wherein the method further comprises:
determining, according to the unique identifier of the resource, a Common EDCH resource corresponding to the unique identifier of the resource; and
releasing an uplink connection of the user equipment that uses the Common EDCH resource if the Common EDCH resource corresponding to the unique identifier of the resource is being used by a user equipment in the Cell_FACH state.

4. The method according to claim 1, further comprising:
determining, according to the unique identifier of the resource, a Common EDCH resource corresponding to the unique identifier of the resource;
selecting identification information of a sub-resource of a set of Common EDCH resources among idle Common EDCH resources if the Common EDCH resource corresponding to the unique identifier of the resource is being used by a user equipment in the Cell_FACH state; and
sending response information to the RNC, wherein the response information comprises identification information of one or more sub-resources in the Common EDCH resource.

5. The method according to claim 1, further comprising:
determining, according to the unique identifier of the resource, a Common EDCH resource corresponding to the unique identifier of the resource; and
sending failure response information to the RNC if the Common EDCH resource corresponding to the unique identifier of the resource is being used by a user equipment in the Cell_FACH state and no idle Common EDCH resource is available.

6. The method according to claim 1, further comprising:
sending response information to the RNC if the user equipment for which the Cell_DCH link is to be established is in the Cell_FACH state currently, wherein the response information comprises identification information of one or more sub-resources in the Common EDCH resource that is being used by the user equipment for which the Cell_DCH link is to be established.

7. The method according to any one of claims 1 to 6, wherein the Common EDCH resource comprises at least one of the following sub-resources: a fractional dedicated physical channel (F-DPCH) resource, an E-DCH relative grant channel (E-RGCH) resource, an E-DCH HARQ acknowledgment indicator channel (E-HICH) resource, and a fractional transmitted precoding indicator channel (F-TPICH) resource.

8. The method according to claim 7, wherein the response message further comprises E-RGCH resource information, E-HICH resource information, F-DPCH resource information, or Common EDCH index information, and/or F-DPCH timing offset information, so that the RNC configures a timing offset of the user equipment in the Cell_DCH state according to the F-DPCH timing offset information, acquires F-DPCH resource information from corresponding Common EDCH resource information according to the E-RGCH resource information, the E-HICH resource information, or the Common EDCH index information, and allocates the acquired F-DPCH resource information to the user equipment in the Cell_DCH state.

9. A method for reconfiguring a common enhanced dedicated channel resource, wherein the method comprises:
allocating a common enhanced dedicated channel (Common EDCH) resource to a forward access channel (FACH) in a base station in a reconfiguration process of a physical shared channel;
informing a user equipment in a Cell_DCH state in a forward access channel (Cell_FACH) state of the allocated Common EDCH resource in a form of broadcast;
sending a radio link management message to the base station, wherein the radio link management message carries a unique identifier of a resource allocated to a user equipment in a Cell_DCH state, and the unique identifier of the resource is a unique identifier of a sub-resource in the Common EDCH resource, so that the base station determines, according to the unique identifier of the resource, whether the user equipment for which a Cell_DCH link is to be established is in the Cell_FACH state currently;
receiving response information returned by the base station; and
sending the response information to the user equipment in the Cell_DCH state.

10. The method according to claim 9, wherein the method further comprises:
determining that the base station modifies the allocated resource if a Common EDCH resource corresponding to a number that is of sub-resource of the Common EDCH and is carried in a returned message is different from a Common EDCH resource corresponding to the unique identifier that is of the resource and is carried in the radio link management message sent to the base station; and
readjusting link resource information.

11. The method according to claim 9, wherein the sending the response information to user equipment in the Cell_DCH state specifically comprises:
configuring a timing offset of the user equipment in the Cell_DCH state according to F-DPCH timing offset information in the returned information;
acquiring F-DPCH resource information from corresponding Common EDCH resource information according to E-RGCH resource information, E-HICH resource information, or Common EDCH index information allocated to the user equipment in the Cell_DCH state; and
allocating the acquired F-DPCH resource information to the user equipment in the Cell_DCH state.

12. A base station, wherein the base station comprises:
a first receiving unit, configured to receive a common enhanced dedicated channel (Common EDCH) resource, wherein the common enhanced dedicated channel (Common EDCH) resource is allocated by a radio network controller (RNC) to a forward access channel (FACH) for use in a reconfiguration process of a physical shared channel;
a second receiving unit, configured to receive a radio link management message sent by the RNC, wherein the radio link management message carries a unique identifier of a resource allocated by the RNC to a user equipment in a dedicated channel (Cell_DCH) state, and the unique identifier of the resource is a unique identifier of a sub-resource in the Common EDCH resource;
a determining unit, configured to determine, according to the unique identifier of the resource, whether the user equipment for which a Cell_DCH link is to be established is in a Cell_FACH state currently; and
a sending unit, configured to return response information to the RNC for sending the response information to the user equipment in the Cell_DCH state.

13. The base station according to claim 12, wherein the sending unit is further configured to: determine, according to the unique identifier of the resource, a Common EDCH resource corresponding to the unique identifier of the resource, and send response information to the RNC, wherein the response information comprises identification information of one or more sub-resources in the Common EDCH resource corresponding to the unique identifier of the resource; or
determine, according to the unique identifier of the resource, a Common EDCH resource corresponding to the unique identifier of the resource, and release an uplink connection of the user equipment that uses the Common EDCH resource if the Common EDCH resource corresponding to the unique identifier of the resource is being used by a user equipment in the Cell_FACH state; or
determine, according to the unique identifier of the resource, a Common EDCH resource corresponding to the unique identifier of the resource, and select identification information of a sub-resource of a set of Common EDCH resources among idle Common EDCH resources if the Common EDCH resource corresponding to the unique identifier of the resource is being used by a user equipment in the Cell_FACH state, and send response information to the RNC, wherein the response information comprises identification information of one or more sub-resources in the Common EDCH resource; or
determine, according to the unique identifier of the resource, a Common EDCH resource corresponding to the unique identifier of the resource, and send failure response information to the RNC if the Common EDCH resource corresponding to the unique identifier of the resource is being used by a user equipment in the Cell_FACH state and no idle Common EDCH resource is available; or
send response information to the RNC if the user equipment for which the Cell_DCH link is to be established is in the Cell_FACH state currently, wherein the response information comprises identification information of one or more sub-resources in the Common EDCH resource that is being used by the user equipment for which the Cell_DCH link is to be established.

14. The base station according to claim 12 or 13, wherein the Common EDCH resource comprises at least one of the following sub-resources: a fractional dedicated physical channel (F-DPCH) resource, an E-DCH relative grant channel (E-RGCH) resource, an E-DCH HARQ acknowledgment indicator channel (E-HICH) resource, and a fractional transmitted precoding indicator channel (F-TPICH) resource.

15. The base station according to claim 14, wherein the response message further comprises E-RGCH resource information, E-HICH resource information, F-DPCH resource information, or Common EDCH index information, and/or F-DPCH timing offset information, so that the RNC configures a timing offset of the user equipment in the Cell_DCH state according to the F-DPCH timing offset information, acquires F-DPCH resource information from corresponding Common EDCH resource information according to the E-RGCH resource information, the E-HICH resource information, or the Common EDCH index information, and allocates the acquired F-DPCH resource information to the user equipment in the Cell_DCH state.

16. A radio network controller, wherein the radio network controller comprises:
a resource configuring unit, configured to allocate a common enhanced dedicated channel (Common EDCH) resource to a forward access channel (FACH) in a base station in a reconfiguration process of a physical shared channel, and inform a user equipment in the Cell_DCH state in a forward access channel (Cell_FACH) state of the allocated Common EDCH resource in a form of broadcast;
a first information sending unit, configured to send a radio link management message to the base station, wherein the radio link management message carries a unique identifier of a resource allocated to a user equipment in a Cell_DCH state, and the unique identifier of the resource is a unique identifier of a sub-resource in the Common EDCH resource, so that the base station determines, according to the unique identifier of the resource, whether the user equipment for which a Cell_DCH link is to be established is in the Cell_FACH state currently;
an information receiving unit, configured to receive response information returned by the base station; and
a second information sending unit, configured to send the response information to a user equipment in the Cell_DCH state.

17. The radio network controller according to claim 16, wherein the radio network controller further comprises:
a reconfiguring unit, configured to: when a Common EDCH resource corresponding to a number that is of sub-resource of the Common EDCH and is carried in the returned message is different from a Common EDCH resource corresponding to the unique identifier that is of the resource and is carried in the radio link management message sent to the base station, determine that the base station modifies the allocated resource, and readjust link resource information.

18. The radio network controller according to claim 16, wherein the second information sending unit is specifically configured to: configure a timing offset of the user equipment in the Cell_DCH state according to F-DPCH timing offset information in the returned information, acquire F-DPCH resource information from corresponding Common EDCH resource information according to E-RGCH resource information, E-HICH resource information, or Common EDCH index information in the resource allocated to the user equipment in the Cell_DCH state, and allocate the acquired F-DPCH resource information to the user equipment in the Cell_DCH state.

19. A system for reconfiguring a common enhanced dedicated channel resource, wherein the system comprises the base station according to any one of claims 12 to 15 and/or the radio network controller according to any one of claims 16 to 18.
